# EUROPEAN PATENT SPECIFICATION

(11) **EP 2 849 574 B1**
(45) Date of publication and mention of the grant of the patent: **12.06.2019**
(21) Application number: 13720785.8
(22) Date of filing: 17.04.2013
(51) Int. Cl.: A23G 3/22, B65G 15/28, B65G 49/00

(54) **TEMPERING MACHINE FOR THE PRODUCTION OF CHOCOLATES AND SIMILAR PRODUCTS, AND RELATIVE COMBINED CONVEYOR BELT**
TEMPERIERMASCHINE FÜR DIE HERSTELLUNG VON SCHOKOLADEN UND ÄHNLICHER PRODUKTRE, UND ZUGEHÖRIGER FÖRDERGURT
MACHINE DE CONDITIONNEMENT POUR LA PRODUCTION DES CHOCOLATS ET PRODUITS SIMILAIRES, ET CONVOYEUR À COURROIE RELATIVE

(30) Priority: 17.05.2012 IT MI20120853
(43) Date of publication of application: 25.03.2015
(73) Proprietor: BRAVO S.p.A., 36075 Montecchio Maggiore (Vicenza) (IT)
(72) Inventor: BRAVO, Genesio, 36050 Sovizzo (Vicenza) (IT)
(74) Representative: Martegani, Franco
(86) International application number: PCT/EP2013/001202
(87) International publication number: WO 2013/170925

(56) References cited:
- EP-A2- 0 804 882
- WO-A1-94/25378
- US-A- 1 898 771
- US-A- 2 260 686

## Description

The present invention relates to a tempering machine for the production of chocolates and similar products, and the relative combined conveyor belt.

The present invention is advantageously used for the production of chocolates with a solid filling, in particular with the possibility of being subsequently coated externally with an edible material in powder form, such as cocoa powder, powdered sugar or equivalent substances, to which the following description will make explicit reference, at the same time maintaining its generic characteristics.

In the confectionery industry, chocolate tempering machines are well-known, such as for example those described in Italian patent applications MI2011A001039 filed on June 9, 2011 and MI2011A001164 filed on June 27, 2011 in the name of the same Applicant.

The document EP 804 882 discloses a combined tempering and coating/spreading machine for cocoa butter or similar fat-containing masses which incorporates a tempering station, a coating/spreading station, and a screen belt (6) on which the food products rest as they pass through the coating/spreading station. The document WO94/25378 relates to fabrication and utilisation of woven-wire belt and work product conveyance structures which enable control of belt travel along a curved-path by dynamic frictional contact between a rotary drive means and a lateral edge portion of the belt. The document discloses a fabricating method for an elongated woven-wire belt for direct-contact dynamic-frictional-drive along an inner perimeter lateral edge portion when the belt is moving in a path which is curved in a lateral direction with respect to its lengthwise direction. A curved path structure for support of such belt is disclosed along with methods of assembly and operation of curved path support structures.

A chocolate tempering machine generally comprises a tank containing the chocolate being processed and the tank is connected by means of an outflow tube to a pump (normally of the worm-conveyor type), in turn connected to a tube terminating in a distribution spout which is situated above the tank, thus causing a free fall of the chocolate into the underlying tank at a certain so-called crystallization temperature, in a kind of closed circuit.

In this way, when the chocolate is removed from beneath the distribution spout, at a certain so-called crystallization temperature, and allowed to solidify, thanks to the formation of crystal particulates of cocoa butter (integral part of the chocolate blend), a perfectly glossy product is obtained, having a uniform colour and organoleptically optimum.

In order to produce chocolates or variably-sized bars of chocolate using a known tempering machine of the type described above, various forms of moulds can be used, into which the chocolate being tempered is first poured and then emptied, leaving a thin layer of chocolate adhering to the walls of the same mould.

The layer of chocolate thus formed is then filled with various flavours and, at the end, a further layer of chocolate is poured onto the mould to form the bottom of the chocolate. When the chocolate has solidified, the chocolates produced are then detached from the above moulds by slightly shaking the mould itself.

Alternatively, in order to produce filled chocolates, in particular with a solid material, the tempering machine is coupled with a continuously moving horizontal conveyor belt or mobile coating machine, along which various operative sections are generally arranged consecutively, for respectively loading the solid material (called ganache cream) onto the belt, coating the solid material with tempered chocolate, eliminating excess portions of chocolate, forming single chocolates with the use of suitably toothed wheels, cutting or finishing means, and drying and final decoration means, and finally removing the single chocolates thus produced from the same belt to be subsequently wrapped.

The specific structural configuration and the high operating rates of the conveyor belt and sections described above, is at present highly specialized and must have a "closed" and defined structure, and it is therefore not possible to effect further processings on the chocolates thus produced.

In particular, the closed structure of the conveyor belt described above does not allow the chocolates produced to be removed offline for their subsequent outer coating with powder material, such as for example cocoa powder, powdered sugar or equivalent materials, in order to obtain so-called truffles.

An objective of the present invention is therefore to solve the problem of the known art indicated above. In particular, an objective of the present invention is to provide a tempering machine which makes it possible, with a single conveyor belt, to effectively produce both conventional chocolates, or without any further external treatment, and also chocolates subsequently suitable for being externally coated with a powder food material.

A further objective of the present invention is to provide a conveyor belt to be coupled with a chocolate tempering machine for the production of filled chocolates with the possibility of effecting further external treatment on the same chocolates such as coating with powder material.

The structural and functional characteristics of the present invention and its advantages with respect to the known art will appear more evident from the following claims, and in particular from the following description referring to the enclosed drawings, which show the schematizations of two preferred but nonlimiting embodiments of a tempering machine equipped with a conveyor belt or coating machine, wherein:
- figure 1 represents a first preferred embodiment of the tempering machine, object of the invention, in a perspective view;
- figure 2 is a perspective view on an enlarged scale of the conveyor belt of the machine of figure 1;

- figure 3 represents a second preferred embodiment of the tempering machine, object of the invention, in a perspective view;
- figure 4 is a perspective view on an enlarged scale of the conveyor belt of the machine of figure 3; and
- figures 5A, 5B and 5C illustrate, in respective schematic front views, a component of the tempering machine of figures 1 and 3 in three consecutive different operating positions.

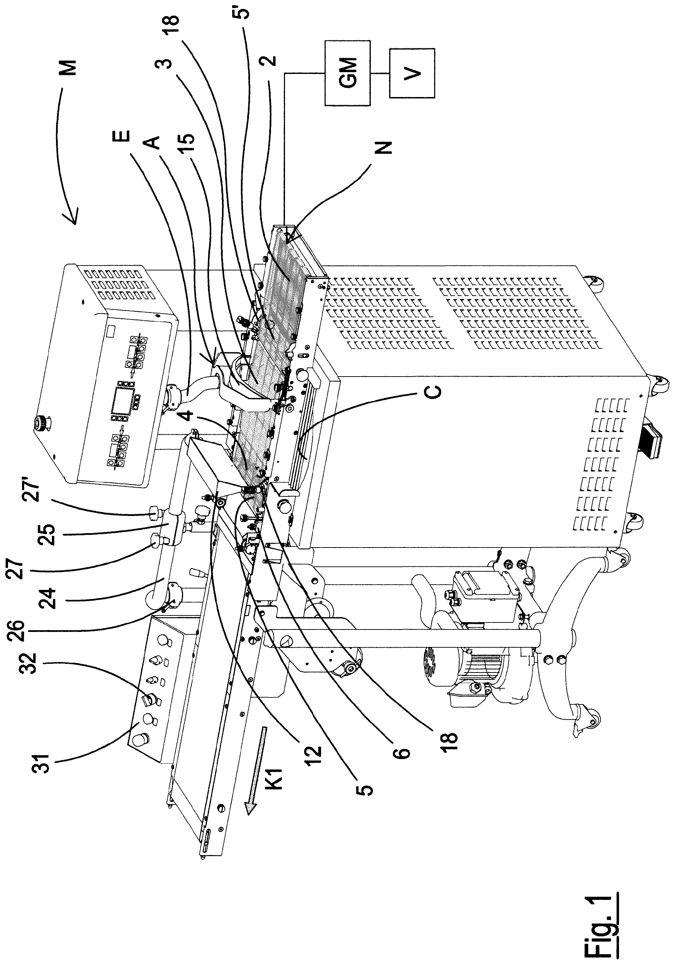

With reference to figures 1,2 and 3,4, M indicates as a whole a tempering machine for the production of chocolates, in particular filled chocolates (known and not illustrated).

The machine M is of the type comprising a tank containing chocolate (known and not illustrated), which is connected to a pump (normally of the worm-conveyor type, also known and not illustrated), which in turn is connected to a distributer tube E of tempered chocolate, and a horizontal meshed conveyor belt N suitable for feeding solid edible material ("ganache cream" - not illustrated) to be coated with chocolate through a collecting container C situated beneath the distributer E, and belt N itself.

A doser A of the chocolate is also an integrant part of the machine M, generally defined, in a known way, by a dosing arc 15, which is basically situated beneath the distributer E, connected to the same distributer E, and above the belt N for distributing chocolate onto the solid edible material advancing on the belt N itself.

An operative section 2 for loading the solid material to be used as solid filling onto the belt N, an operative section 3 for coating the solid material with chocolate, positioned in correspondence with and beneath the dosing arc 15, an operative section 4 for eliminating excess chocolate, by blowing (blower 12 in figures 1-4), an operative finishing section 5 for forming single filled chocolates with the use of a suitably toothed wheel group 18 suitable for effecting a cutting operation also called "beating", and finally an operative section 6 for completing the lower bottom surface of each filled chocolate, are arranged consecutively along the belt N of the machine M, forming part of the same belt N.

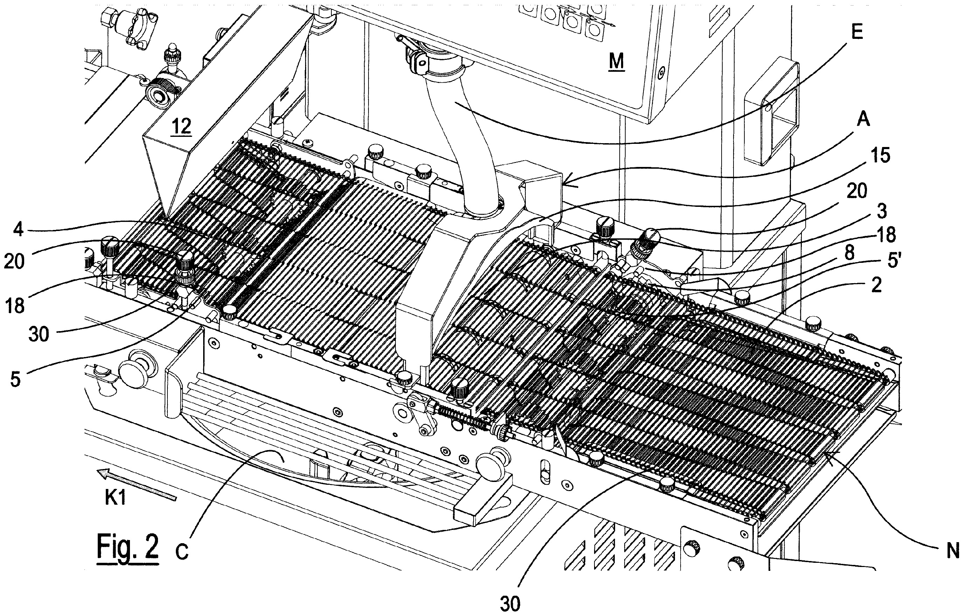

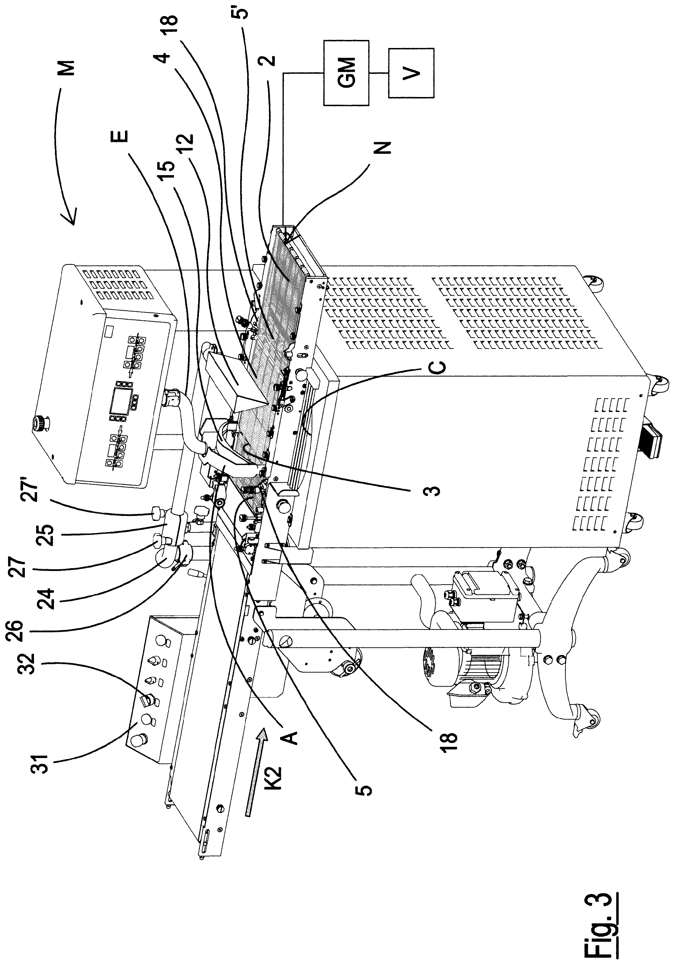

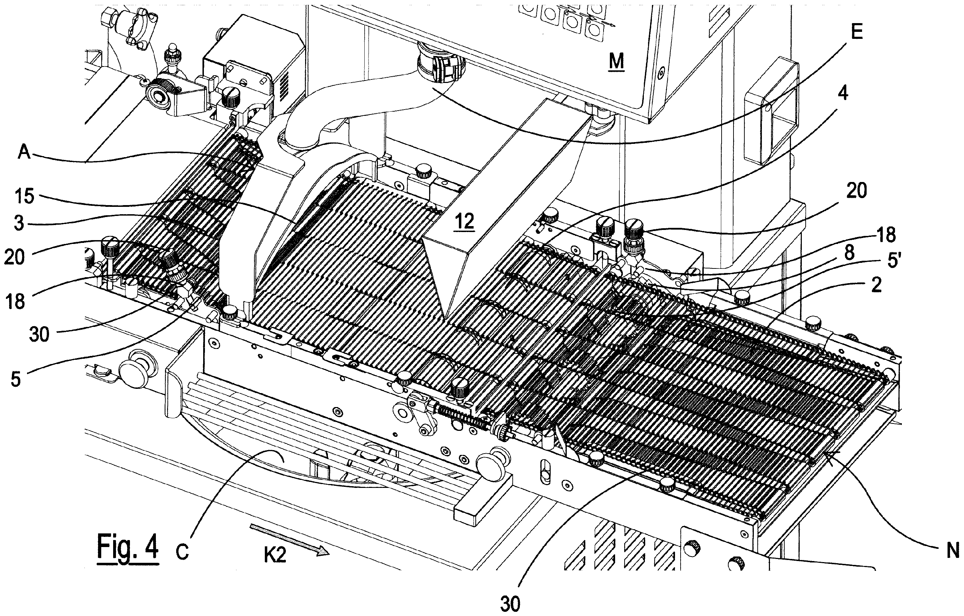

According to the present invention, in order to be able to allow the production of filled chocolates either without additional external surface treatment or in the version with an outer coating of powder material (truffle), the belt N of the machine M is suitable for being moved, alternatively in the horizontal direction K1, or in the conventional advance direction of the belt N for the production of filled chocolates without external treatment (Figures 1 and 2), or in the opposite horizontal direction K2, with the use of means suitable for inverting the movement of the belt N itself (Figures 3 and 4).

Said inverting means are of the type comprising inverters V (for example an inverter or tele-inverter) connected and applied to the driving group of the belt N itself, schematized with a block GM in figures 1 and 3, and activated by a direction command 32 present in the control panel 31 of the tempering machine M.

In this way, when in use, the operator can change the production, passing from the production of chocolates without further external treatment to the possibility of producing chocolates to be subsequently subjected to coating with powder material (truffle) and viceversa, without effecting any substitution of the belt N or without significantly varying the structure of the belt N itself, simply by inverting the advance direction K1 to the opposite direction K2 of the conveyor belt N, or viceversa.

According to the embodiment illustrated in figures 3 and 4, the positions of the above-mentioned operative sections 3 and 4 are advantageously reciprocally inverted along the belt N, with respect to the normal position of the machine M illustrated in figures 1 and 2 and with the belt N advancing in the direction K1.

This inversion can be operatively effected thanks to an easy and rapid translation of an air tube 24 connected to the blower 12 along the horizontal axis and parallel to the plane of the belt N, as it is fixed by means of a clamp 25 which allows the same tube 24 to slide without twisting, thanks to a thin guide (not illustrated) obtained by penetrating the base of the tube 24 which rests on the same clamp 25. If the distance between the arc 15 and blower 12 is not sufficient, however, the whole air tube 24 can be directly substituted with a longer one, by simply unhooking the rapid connection 26 situated at the base of the tube 24 itself and dismantling the clamp 25 by unscrewing the two screws 27 and 27' present on the same clamp 25.

According to the embodiments of the invention illustrated in figures 1 to 4, the machine M envisages the presence of a further finishing (cutting or decoration) and/or beating group 18 with respect to that envisaged in the operative section 5: said further group 18 is positioned in correspondence with the above-mentioned section 2 of the belt N of the machine M and is suitable for effecting, when the inversion of the belt N from the conventional advance direction K1 to the opposite direction K2 is selected and actuated, a finishing and/or beating operation of the chocolates substantially analogous to that of the above section 5. In other words, the further group 18 defines an additional finishing and/or beating section 5' with an identical function, analogous to section 5 of the belt N.

The chocolates thus obtained after the finishing operation effected by the group 18, are then subsequently ejected from the belt N at the end of the section 2, to be collected in a container (not shown), from which they can be subsequently removed in order to effect, according to the known method, a final coating by distributing an edible material in powder form, such as cocoa butter, powdered sugar or equivalent products, onto the outer surface, thus producing the corresponding truffles.

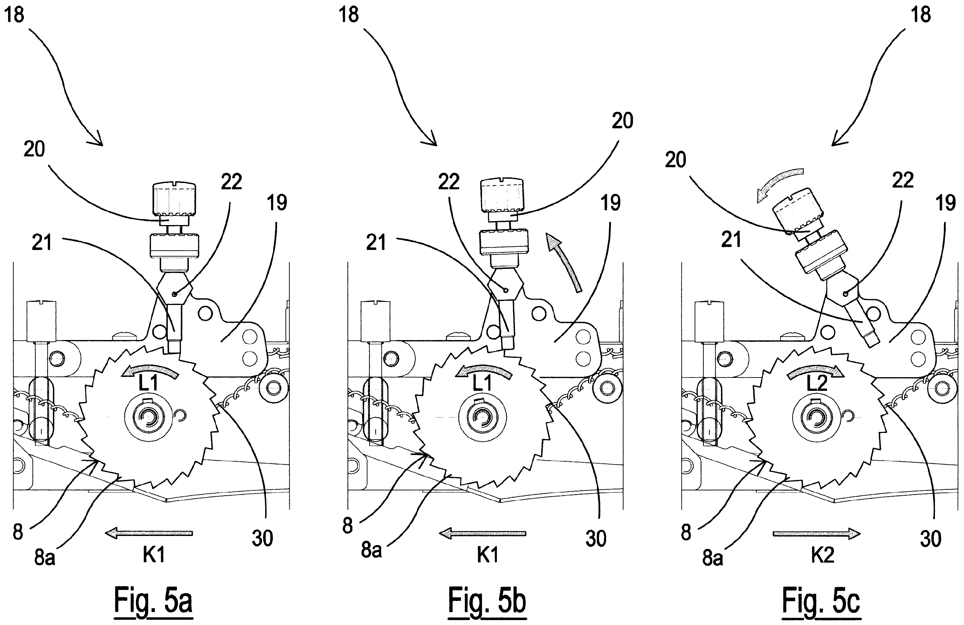

Finally, with respect to the finishing and/or beating operation of the chocolates on the part of the two above-mentioned groups 18, it should be pointed out that if the belt N is advancing in the conventional direction K1, the operative section 5 is composed, according to what is illustrated in figures 5A and 5B, of a wheel 8 with saw-teeth 8a, which is suitable for cooperating with a jack 20 equipped with a striker 21 suitable for pressing the teeth 8a of the same wheel 8; the jack 20 is positioned vertically with respect to the same wheel 8 and is adjustable in height and connected directly or indirectly to the metallic mesh 30 of the belt N by means of a specific tie-rod 19.

In this way, the striker 21 of the jack 20, by following the toothed profile of the wheel 8 which is rotating in an anticlockwise direction L1 in figures 5A and 5B, causes a jump of the mesh 30 of the belt N, and consequently an advancing of the belt N, with each passage of a tooth 8a of the wheel 8, and consequently the faster the advance movement of the belt N, the more frequent the striking will be.

The additional finishing section 5' is positioned specularly with respect to the above section 5 and comprises a group 18 having the same elements 8, 8a, 19, 20, 21 described above.

When in use, when the belt N is moving in the direction K1, i.e. when the toothed wheel 8 of the section 5 is turning according to an anticlockwise direction L1 (figures 5a and 5b), whereas the toothed wheel 8 of the section 5' is turning according to a clockwise direction L2 (figure 5c), the jack 20 (assembled on both sections 5 and 5'), can rotate around a horizontal pin 22 so that its striker 21 is free to move away from the contact position with the teeth 8a of the wheel 8.

In this way, with an inversion of the advance direction of the belt N (for example from K1 to K2), it is the tooth 8a that pushes the striker 21 and therefore causes the rotation around the pin 22 of the jack 20 until it reaches the position in which it is not cooperating with the toothed wheel 8.

This avoids the risk of the toothed wheel 8 remaining blocked in the section 5 by the jack 20 (i.e. between a tooth 8a and the vertically blocked striker 21) causing breakage of the mesh 30. In the respective section 5', on the other hand, the jack can now be positioned vertically (in order to obtain the desired striking), as the toothed wheel 8 has now started to turn in the direction L1.

## Claims

1. A tempering machine (M) for the production of chocolates and similar products, comprising a motorized conveyor belt (N) suitable for advancing in a horizontal direction (K1) of an edible material to be coated with chocolate; and at least dosing and distributing means (E,A,15) of tempered chocolate, said means (E,A,15) being positioned in correspondence with an operative coating section (3) and being suitable for distributing chocolate onto said edible material advancing on said belt (N) for coating the same edible material and producing said chocolates; **characterized in that** it comprises actuator-inverter means (32,V) suitable for being connected to said motorized belt (N) for alternatively controlling the inversion of the advance direction of said belt (N) so as to allow the same belt (N) to advance in a direction (K2) opposite to said horizontal direction (K1), and viceversa.

2. The tempering machine according to claim 1, **characterized in that** said conveyor belt (N) comprises a first and a second operative section (5, 5') for finishing or beating said chocolates; each of said sections (5,5') being positioned immediately downstream, with respect to said relative advance direction (K1, K2) of said conveyor belt (N), of an operative section (4) for eliminating excess chocolate by means of blowing, in turn positioned downstream of said coating section (3).

3. The tempering machine according to claim 2, **characterized in that** each of said first and second finishing or beating sections (5,5') comprises cutting means (18) defined by a wheel (8) with saw teeth (8a), which is suitable for cooperating with a jack (20) equipped with a striker (21) suitable for pressing on the teeth (8a) of the wheel (8) itself; at least in said second section (5') said jack (20) being free to rotate around a horizontal pin (22) so that its striker (21) is free to move away from the contact position with said teeth (8a) of said wheel (8).

4. The tempering machine according to claim 2 or 3, **characterized in that** said elimination section (4) comprises tube means (24) equipped with quick-release means (26).

5. A conveyor belt (N) to be combined with a tempering machine (M) for the production of chocolates **characterized in that** said conveyor belt (N) is motorized and suitable for advancing in a horizontal direction (K1) of an edible material to be coated with chocolate, said conveyor belt (N) comprising an actuator-inverter means (32,V) suitable for being connected to said motorized belt (N) for alternatively controlling the inversion of the advance direction of said belt (N) so as to allow the same belt (N) to advance in a direction (K2) opposite to said horizontal direction (K1), and viceversa, said belt (N) further comprising a first and a second operative section (5, 5') for finishing or beating said chocolates; each of said sections (5,5') being positioned immediately downstream, with respect to said relative advance direction (K1 , K2) of said conveyor belt (N), of an operative section (4) for eliminating excess chocolate by means of blowing, in turn positioned downstream of a coating section (3) for distributing chocolate onto said edible material.

6. A conveyor belt (N) according to claim 5, **characterized in that** each of said first and second finishing or beating sections (5,5') comprises cutting means (18) defined by a wheel (8) with saw teeth (8a), which is suitable for cooperating with a jack (20) equipped with a striker (21) suitable for pressing on the teeth (8a) of the wheel (8) itself; at least in said second section (5') said jack (20) being free to rotate around a horizontal pin (22) so that its striker (21) is free to move away from the contact position with said teeth (8a) of said wheel (8).

7. A conveyor belt (N) according to claim 5, **characterized in that** said elimination section (4) comprises tube means (24) equipped with quick-release means (26).

## Patentansprüche

1. Temperiermaschine (M) zur Herstellung von Schokoladen und ähnlichen Produkten, mit einem motorisierten Förderband (N), das zum Vorwärtsbewegen eines mit Schokolade zu beschichtenden essbaren Materials in horizontaler Richtung (K1) geeignet ist, und mindestens einem Dosier- und Verteilermittel (E, A, 15) für temperierte Schokolade, wobei das Mittel (E, A, 15) entsprechend einem operativen Beschichtungsabschnitt (3) positioniert ist und zum Verteilen von Schokolade auf das sich auf dem Band (N) vorwärtsbewegende essbare Material zum Beschichten desselben essbaren Materials und zum Herstellen der Schokoladen geeignet ist; **dadurch gekennzeichnet, dass** es ein Aktorumkehrmittel (32, V) umfasst, das geeignet ist, mit dem motorisierten Riemen (N) verbunden zu werden, um alternativ die Umkehrung der Vorschubrichtung des Riemens (N) zu steuern, so dass derselbe Riemen (N) in eine Richtung (K2) entgegengesetzt zur horizontalen Richtung (K1) vorrücken kann und umgekehrt.

2. Temperiermaschine nach Anspruch 1, **dadurch gekennzeichnet, dass** das Förderband (N) einen ersten und einen zweiten operativen Abschnitt (5, 5') zum Veredeln oder Schlagen der Schokoladen umfasst; wobei jeder der Abschnitte (5, 5') unmittelbar stromabwärts bezogen auf die relative Vorschubrichtung (K1, K2) des Förderbandes (N) eines operativen Abschnitts (4) zum Entfernen überschüssiger Schokolade durch Blasen positioniert ist, der wiederum stromabwärts des Beschichtungsabschnitts (3) angeordnet ist.

3. Temperiermaschine nach Anspruch 2, **dadurch gekennzeichnet, dass** jeder der ersten und zweiten Veredelungs- oder Schlagabschnitte (5, 5') ein Schneidmittel (18) umfasst, das durch ein Rad (8) mit Sägezähnen (8a) definiert ist, das geeignet ist, mit einem Heber (20) zusammenzuwirken, der mit einem Anschlag (21) ausgestattet ist, der zum Aufpressen der Zähne (8a) des Rades (8) selbst geeignet ist; wobei zumindest in dem zweiten Abschnitt (5') der Heber (20) sich frei um einen horizontalen Bolzen (22) drehen kann, so dass sich sein Anschlag (21) frei von der Kontaktposition mit den Zähnen (8a) des Rades (8) wegbewegen kann.

4. Temperiermaschine nach einem der Ansprüche 2 oder 3, **dadurch gekennzeichnet, dass** der Eliminierungsabschnitt (4) ein Rohrmittel (24) umfasst, das mit einem Schnellwechselmittel (26) ausgestattet ist.

5. Förderband (N), das mit einer Temperiermaschine (M) zur Herstellung von Schokoladen kombiniert werden kann, **dadurch gekennzeichnet, dass** das Förderband (N) motorisiert ist und zum Vorwärtsbewegen eines mit Schokolade zu beschichtenden essbaren Materials in horizontaler Richtung (K1) geeignet ist, wobei das Förderband (N) ein Aktorumkehrmittel (32, V) umfasst, das zum Verbinden mit dem motorisierten Band (N) zum alternativen Steuern der Umkehrung der Vorschubrichtung des Riemens (N) geeignet ist, um zu ermöglichen, dass das Band (N) sich in eine Richtung (K2) entgegengesetzt zur horizontalen Richtung (K1) vorwärts bewegt und umgekehrt, wobei der Riemen (N) ferner einen ersten und einen zweiten operativen Abschnitt (5, 5') zum Veredeln oder Schlagen der Schokoladen umfasst; wobei jeder der Abschnitte (5, 5') unmittelbar stromabwärts bezogen auf die relative Vorschubrichtung (K1, K2) des Förderbandes (N) eines operativen Abschnitts (4) zum Eliminieren überschüssiger Schokolade durch Blasen positioniert ist, der wiederum stromabwärts eines Beschichtungsabschnitts (3) zum Verteilen von Schokolade auf das essbare Material positioniert ist.

6. Förderband (N) nach Anspruch 5, **dadurch gekennzeichnet, dass** jeder der ersten und zweiten Veredelungs- oder Schlagabschnitte (5, 5')ein Schneidmittel (18) umfasst, das durch ein Rad (8) mit Sägezähnen (8a) definiert ist, das geeignet ist, mit einem Heber (20) zusammenzuwirken, der mit einem Anschlag (21) ausgestattet ist, der geeignet ist, auf die Zähne (8a) des Rades (8) selbst zu drücken; wobei zumindest in dem zweiten Abschnitt (5') der Heber (20) sich frei um einen horizontalen Bolzen (22) drehen kann, so dass sein Anschlag (21) sich frei von der Kontaktposition mit den Zähnen (8a) des Rades (8) weg bewegen kann.

7. Förderband (N) nach Anspruch 5, **dadurch gekennzeichnet, dass** der Eliminierungsabschnitt (4) ein Rohrmittel (24) umfasst, das mit einem Schnellwechselmittel (26) ausgestattet ist.

## Revendications

1. Machine de conditionnement (M) pour la production de chocolats et produits similaires, comprenant un convoyeur à courroie motorisée (N) approprié pour avancer dans une direction horizontale (K1) d'une matière comestible à recouvrir de chocolat ; et au moins un moyen de dosage et de distribution (E, A, 15) de chocolat conditionné, ledit moyen (E, A, 15) étant positionné en correspondance avec une section de recouvrement fonctionnelle (3) et étant approprié pour distribuer du chocolat sur ladite matière comestible avançant sur ladite courroie (N) afin de recouvrir la même matière comestible et produire lesdits chocolats ; **caractérisée par le fait qu'**elle comprend un moyen d'actionneur-inverseur (32, V) approprié pour être relié à ladite courroie motorisée (N) pour commander de manière alternée l'inversion de la direction d'avance de ladite courroie (N) de façon à permettre à la même courroie (N) d'avancer dans une direction (K2) opposée à ladite direction horizontale (K1), et inversement.

2. Machine de conditionnement selon la revendication 1, **caractérisée par le fait que** ledit convoyeur à courroie (N) comprend des première et seconde sections fonctionnelles (5, 5') pour finir ou battre lesdits chocolats ; chacune desdites sections (5, 5') étant positionnée immédiatement en aval, par rapport à ladite direction d'avance relative (K1, K2) dudit convoyeur à courroie (N), d'une section fonctionnelle (4) pour éliminer l'excès de chocolat au moyen d'un soufflage, positionnée à son tour en aval de ladite section de recouvrement (3).

3. Machine de conditionnement selon la revendication 2, **caractérisée par le fait que** chacune desdites première et seconde sections de finition ou de battage (5, 5') comprend un moyen de coupe (18) défini par une roue (8) avec des dents de scie (8a), qui est approprié pour coopérer avec un vérin (20) équipé d'un percuteur (21) approprié pour appuyer sur les dents (8a) de la roue (8) elle-même ; au moins dans ladite seconde section (5'), ledit vérin (20) étant libre de tourner autour d'une broche horizontale (22) de telle sorte que son percuteur (21) est libre de s'éloigner de la position de contact avec lesdites dents (8a) de ladite roue (8).

4. Machine de conditionnement selon la revendication 2 ou 3, **caractérisée par le fait que** ladite section d'élimination (4) comprend un moyen de tube (24) équipé d'un moyen à libération rapide (26).

5. Convoyeur à courroie (N) à combiner à une machine de conditionnement (M) pour la production de chocolats, **caractérisé par le fait que** ledit convoyeur à courroie (N) est motorisé et approprié pour avancer dans une direction horizontale (K1) d'une matière comestible à recouvrir de chocolat, ledit convoyeur à courroie (N) comprenant un moyen d'actionneur-inverseur (32, V) approprié pour être relié à ladite courroie motorisée (N) pour commander de manière alternée l'inversion de la direction d'avance de ladite courroie (N) de façon à permettre à la même courroie (N) d'avancer dans une direction (K2) opposée à ladite direction horizontale (K1), et inversement, ladite courroie (N) comprenant en outre des première et seconde sections fonctionnelles (5, 5') pour finir ou battre lesdits chocolats ; chacune desdites sections (5, 5') étant positionnée immédiatement en aval, par rapport à ladite direction d'avance relative (K1, K2) dudit convoyeur à courroie (N), d'une section fonctionnelle (4) pour éliminer l'excès de chocolat au moyen d'un soufflage, positionnée à son tour en aval d'une section de recouvrement (3) pour distribuer le chocolat sur ladite matière comestible.

6. Convoyeur à courroie (N) selon la revendication 5, **caractérisé par le fait que** chacune desdites première et seconde sections de finition ou de battage (5, 5') comprend un moyen de coupe (18) défini par une roue (8) avec des dents de scie (8a), qui est approprié pour coopérer avec un vérin (20) équipé d'un percuteur (21) approprié pour appuyer sur les dents (8a) de la roue (8) elle-même ; au moins dans ladite seconde section (5'), le vérin (20) étant libre de tourner autour d'une broche horizontale (22) de telle sorte que son percuteur (21) est libre de s'éloigner de la position de contact avec lesdites dents (8a) de ladite roue (8).

7. Convoyeur à courroie (N) selon la revendication 5, **caractérisé par le fait que** ladite section d'élimination (4) comprend un moyen de tube (24) équipé d'un moyen à libération rapide (26).
